# EUROPEAN PATENT APPLICATION

(11) **EP 4 279 827 A1**
(43) Date of publication of application: **22.11.2023**
(21) Application number: 23173525.9
(22) Date of filing: 16.05.2023
(51) Int. Cl.: F24F 7/06, F24F 11/00, F24F 11/74, F24F 13/14, F24F 11/75, F24F 13/02

(54) **AIR FLOW CONTROL EQUIPMENT**

(30) Priority: 17.05.2022 CZ 202239900 U
(71) Applicant: Simply Control s.r.o., 37010 Ceske Budejovice (CZ); Lindab Sales CZ s.r.o., 16100 Praha 6 (CZ)
(72) Inventor: Prochazka, Antonin, Ceske Budejovice (CZ); Milner, Karel, Srubec (CZ); Lacha, Josef, Chlumany (CZ); Nemecek, Stanislav, Praha 4 (CZ)
(74) Representative: Sedlák, Jirí

(57) **Abstract**

The air flow control equipment is intended in particular for vacuum air-conditioning and ventilation systems in residential and office buildings, warehouses, and production facilities. The vacuum air-conditioning and ventilation systems usually consist of the central ventilation unit (16) fitted with a fan (17), central control unit, at least one main air streamline (3), at least two air streamlines (2), and at least one connection point (1). The air flow control equipment is then comprised of at least one decentralized control unit (15) arranged in the main air streamline (2), of at least one redistribution mechanism (6) arranged in the connection point (1) and of the fan (17) with pressure-dependent or pressure-independent controllable rotary characteristics that is part of the central ventilation unit (16). All the aforementioned items are connected to the common central control unit that performs the continuous control of the quantity of air exhausted from individual ventilated premises, from individual air streamlines (2) and the building as a whole.

## Description

### Field of the Invention

The invention concerns air flow control equipment intended in particular for air-conditioning and ventilation systems in residential and office buildings, warehouses, and production facilities. This means that the field of engineering services for buildings is concerned.

### Background of the Invention

Air distribution, no matter whether for mere ventilation using ventilation systems or with extension as part of air-conditioning systems or filter-ventilation systems, has become a common part of civil-engineering and renovation projects. Air flow control in residential, office as well as industrial buildings belongs to the essential elements of economic and environmental management and control of thermal comfort, humidity, and sufficient oxygen level within the framework of indoor climate in individual ventilated premises according to their purpose.

Centralized control of heat and air flow makes it possible to respond more effectively and fluently to the needs, including for example the presence or absence of persons in the ventilated rooms or ventilated premises, changes in external as well as outdoor climatic factors, etc., thus considerably reducing the energy demands of the buildings and the size of dimensions of the installed air-handling piping. A standard ventilation system consists of a system of mutually connected terminal branches, called air streamlines, that open into individual ventilated rooms and ventilated premises. The air streamlines from individual directions join in connection points that are connected to at least one main air streamline. The main air streamline is connected to the central ventilation unit equipped with a central control unit. Isobaric or non-isobaric air change is ensured by the central drive unit of the type of either an air conveyor or a fan that is part of the central ventilation unit. The system also includes condensation tanks, heat generators, filtration units, air-moistening systems or air-drying systems. The air circulation control is controlled by the central control unit that controls the drive of the central ventilation unit and that of throttling valves, and/or redistribution valves or de-centralized air flow control systems positioned in the ventilation system piping. The valves are used in pressure ventilation systems. On the other hand, in vacuum ventilation systems one de-centralized control unit is employed. The de-centralized control system ensures air supply to or air exhaust from the assigned zone and is to control the input or output total volume flow rate of air as required. The command to change the air flow intensity and the other parameters of air is given by the central control unit based on data sensed and transmitted to the central control unit by a system of sensors located in individual ventilated rooms, in the air streamlines or the main air streamline fitted with the ventilation inlet or also based on the user interface. Air distribution systems are implemented by piping which has in many cases metal sheathing. In a standard embodiment, the ventilation system is driven by an air-compression system for the supply branch of the ventilation system, meaning that air supply by pressure is utilized. The exhausted branch is based on vacuum, meaning that air is exhausted by vacuum. Some ventilation systems are directly connected to the fire alarm and detection systems, smoke and/or nitrogen oxides detectors, etc. of the buildings.

A variable air control system controlling the amount of flowing air for multiple ventilated zones is divided into three basic embodiments. The first embodiment with variable air flow (VAV) where the system controls the flow of air, meaning its precise quantity based on request from the ventilated premises. The second embodiment refers to the system where constant air flow (CAV) is controlled based on the flow volume settings. This means that when the system is running, the set value of air flow cannot be changed. Also, a combination of the aforementioned systems can be assembled. Air flow control is performed by the central drive unit by changing the revolutions of the fan, thus changing the quantity of air drawn in / compressed by the fan to ensure enough air for all connected ventilated zones.

For air control within the framework of a zone, manually operated valves located inside the piping, distribution box, or directly on the element ensuring air distribution into a specific ventilated space are widely used currently. This regulation system is not very flexible considering the needs of individual ventilated premises and is thus suitable in particular for operation facilities where climate does not change much or where changes thereof do not require extensive changes in air flow rate. In this case, the drive of each valve is ensured by a separate drive unit.

Publicly available databases, such as http://www.elektrodesign.cz/web/cs/product/kel-125-elektricky-ovladany-talirovy-ventil disclose a system where redistribution of air flows is attained using electronically operated disk valves directly in the ventilated rooms by sharing on the inlets into the air streamline. A disadvantage of this system is the necessity to use one or more drives that can control the air flow to a limited extent only. The disk valve is thus positioned in the ceiling or wall and each valve has a dedicated drive unit with a dedicated control mechanism controlling the disk valve motion. A disadvantage of this solution is exactly the fact that each outlet must have a dedicated drive unit and dedicated power supply and control signal distribution systems. Such a solution is easy in terms of design, but unnecessarily expensive, in particular where the ventilated room or ventilated premises can be fitted with a plurality of such disk valves. If this system is employed, positions of other distribution elements cannot be combined and the electronic system always controls only a single air streamline. This system has an unfavourable effect on pressure trends of the entire ventilation system. The system can also be a source of acoustic emissions due to the too high speed of air in the point of its flow throttling. The ventilation unit is usually controlled based on output pressure and in the case of exhaust, based on vacuum.

Another system employed in common technical practice is the system with a variable air flow that in ventilation systems used in residential premises has only an ordinary valve in the exhaust that is driven in one of the selected exhaust directions. Nevertheless, the valve in this case only throttles air and its function is not satisfactory in term of user comfort. The reason is that the other directions are not controlled during throttling, thus providing little collaboration in the case of need to increase air flow to the rooms where air is needed at the moment. Even this system has an unfavourable effect on pressure trends of the entire ventilation system. Even this system can be a source of acoustic emissions due to the too high speed of air in the point of its flow throttling.

The state of the art also include a solution where performance of the ventilation system is increased in response to request for air flow increase. However, in this case no redistribution of air occurs with only the air flow rate increase within the system as a whole. This system has a significant unfavourable effect on higher energy demands of the entire ventilation system manifested in particular in increased consumption of electric power. Such increased consumption is caused by the increased consumption of the fans and also by the increased thermal energy required for heating the increased quantity of distributed air.

The task of the invention is to create equipment for air flow control allowing redistribution of air mass, meaning a specific quantity of exhausted air between the main air streamline and two or more air streamlines branching off the main one, using a single common drive with a plurality of redistribution valves allowing continuous control of a plurality of the exhaust directions by a system of direct redistribution of the exhausted air in one branch of the piping. The function of the air flow control by individual branches of air streamlines should be supplemented also by a de-centralized control member controlling the entire quantity of air exhausted from the system. The equipment concerned should have a simple design, should be easily implementable into existing ventilation systems and should reduce the price of the entire ventilation system assembly due to the use of a fewer expensive, in particular drive and control elements, valves, and controllers, thus making air redistribution more effective. The system should make it possible to have both centralized and decentralized control of the vacuum air-conditioning and ventilation distribution system for the treatment of air supplied to the ventilated premises. In addition, the system should be able to respond to an internal stimulus from the ventilated premises, meaning the so-called BOOST system, for quick ventilation of sanitary rooms, such as bathroom, kitchen or toilet, and possible response to sensory stimuli by a flexible increase in the quantity or intensity of supplied or exhausted air. All the aforementioned specifications should be available without a need to increase the total quantity of exhausted air, provided that this is allowed by the capacity of air exchange in the ventilated premises.

### Summary of the Invention

The disadvantages of the state-of-the-art equipment are eliminated by the disclosed invention being air flow control equipment that is intended in particular for vacuum air-conditioning and ventilation systems in residential and office buildings, warehouses, and production facilities. The vacuum air-conditioning and ventilation systems usually consist of the central ventilation unit fitted with a fan, central control unit, at least one main air streamline, at least two air streamlines, and at least one connection point. At its outlet, the main air streamline is connected to the inlet of the central ventilation unit. The inlet of the main air streamline is connected to the outlet of the connection point that is connected to the outlets of the air streamlines by its inlets. The air streamlines have their inlets in individual ventilated premises. The air flow control equipment consists of at least one de-centralized control unit and at least one redistribution mechanism and of a fan with pressure-dependent or pressure-independent controllable rotary characteristics. The decentralized control unit is arranged in the main air streamline. The redistribution mechanism is arranged in the connecting point. The fan with pressure-dependent or pressure-independent controllable rotary characteristics is part of the central ventilation unit. The de-centralized control unit, redistribution mechanism and fan are connected to the common central control unit that performs the continuous control of the quantity of air exhausted from individual rooms, from individual air streamlines and the building as a whole.

In a preferred embodiment, the redistribution mechanism is part of the connection point and is comprised of only one first drive unit and at least two redistribution valves. The first drive unit and redistribution valves are mutually mechanically connected. Each redistribution valve is located separately, in a pivotal manner in just one inlet of the connection point in the place of its connection to the outlet of the air streamline. The first drive unit is mechanically connected to the first redistribution valve. This connection is ensured by the transmission of rotary motion generated by the first drive unit to the first redistribution valve. The second redistribution valve is then mechanically connected to the first redistribution valve by a coupled mechanism. Rotary motion generated by the first drive unit is thus indirectly transmitted just by the first redistribution valve. Motion of the first redistribution valve and the second redistribution valve is synchronized in a manner allowing at least one of these redistribution valves to close the respective inlet of the connection point at the moment when the other redistribution valve is in the position of its maximum set opening. The angle of displacement of the redistribution valves is the same for both redistribution valves. The ratio of openness by the coupled mechanism of motion of the connected redistribution valves is variable within the framework of the service manual setting of the connection point. Therefore, when one of the redistribution valves is completely closed, this does not automatically mean that the other redistribution valve is opened at an angle of 90°.

In another preferred embodiment the mechanical connection of the first drive unit with the first redistribution valve is implemented by a turning shaft.

In another preferred embodiment the mechanical connection of the first redistribution valve with the second redistribution valve is implemented by a connecting rod. The connecting rod ensures the synchronization of the transmission of the first redistribution valve rotary motion, when the first redistribution valve is actuated by the first drive unit, to the second redistribution valve.

In the following preferred embodiment the mechanical connection of the first redistribution valve with the second redistribution valve is implemented by a mechanical linkage. The mechanical linkage is used for ensuring the synchronized transmission of the first redistribution valve rotation generated by the first drive unit to the second redistribution valve in cases where both redistribution valves are found in air streamlines with no common one central axis.

In another preferred embodiment, the de-centralized control unit refers to a one-way redistribution valve consisting of the second drive unit, main redistribution valve, and a measuring device that measures the volume of air flown. The second drive unit is mechanically connected with the main redistribution valve via the second turning shaft.

In another preferred embodiment, the first drive unit and the second drive unit refer to step motors or servo motors.

In another preferred embodiment, each redistribution valve is arranged in a manner that the scope of the maximum adjustable angle of displacement of the valve is adjustable within a range from 0° to 90°, wherein the sum of the angles of displacement α of the first redistribution valve and β of the second redistribution valve is at any time the same for all possible variants of mutual displacement of both redistribution valves.

The main advantage of this invention is that the air flow control equipment, intended in particular for vacuum air-conditioning and ventilation systems in residential and office buildings, warehouses and production facilities, allows a specific volume of exhausted air to be distributed between the main air streamline and two and more air streamlines branching off the main air streamline using a single common drive unit with a plurality of redistribution valves. This means that the equipment allows continuous control of a plurality of exhaust directions using a system of direct redistribution of the exhausted air in one branch of piping and eliminates acoustic emissions caused by the accelerated flow of air through the redistribution valve at considerably reduced costs. The function of the air flow control by individual branches of air streamlines is supplemented also by the de-centralized control member controlling the entire quantity of air exhausted from the system. The equipment as disclosed here is simple in terms of design, easily implementable in the existing as well as new state-of-the art ventilation systems. The equipment makes the entire ventilation system less expensive and more efficient by the fact that for the proper function of the ventilation system fewer components for air flow redistribution is used where the components allow the same scope of ventilation system to be fitted with fewer expensive, in particular drive and control elements, valves, and control units. The system makes it possible to have both centralized and de-centralized control of the vacuum air-conditioning and ventilation distribution system for the treatment of air supplied to the ventilated premises. The system is capable of response to internal stimuli from the ventilated premises, the so-called BOOST system, for quick ventilation of sanitary rooms, such as bathroom, kitchen or toilet. In addition, the system is capable of response to sensory stimuli by a flexible increase in the quantity or intensity of supplied and exhausted air. All the aforementioned specifications are available without a need to increase the total quantity of exhausted air, provided that this is allowed by the capacity of air exchange in the ventilated premises.

### Brief Description of Figures

The invention will be explained in detail by figures where the following is illustrated:
- Fig. 1: refers to a schematic diagram of the air flow control equipment implemented in ventilation systems, here as the embodiment with just one connection point with a two-way valve and mechanical connection according to claims 2 to 4 and one decentralized control unit. The diagram shows the relationships between the volumes of air flown through the ventilation system,
- Fig. 2: shows one of the examples of arrangement of the connection point with the redistribution mechanism according to claims 2 to 4, meaning with the use of the first drive unit, the first turning shaft and connecting rod,
- Fig. 3: shows one of the examples of arrangement of the connection point with the redistribution mechanism according to claims 2 to 3 and 5, meaning with the use of the first drive unit, the first turning shaft and a mechanical linkage.

### Examples of Invention Embodiments

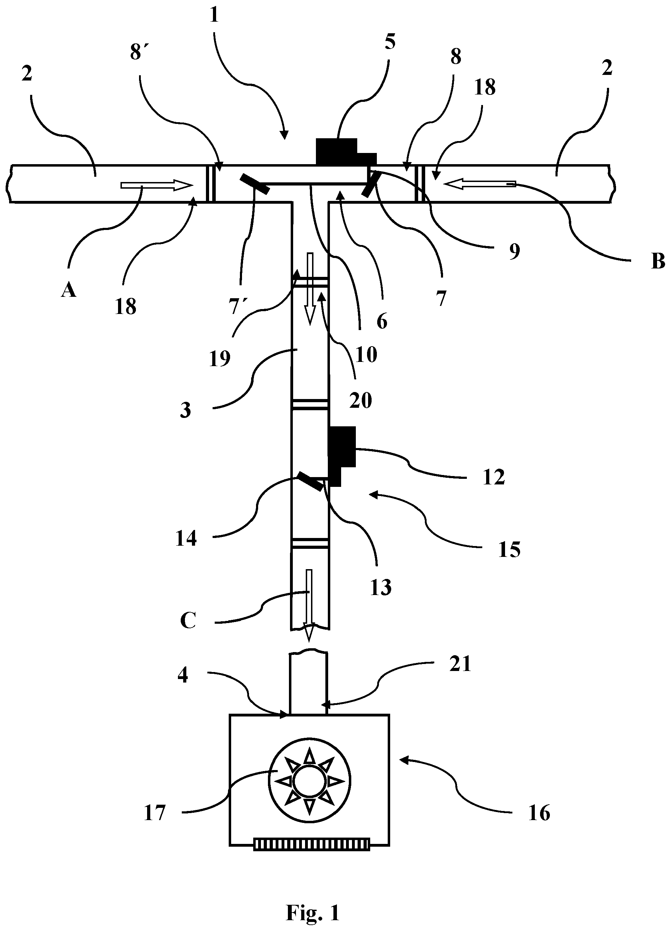

The air flow control equipment shown in Fig. 1 is intended in particular for vacuum air-conditioning and ventilation systems in residential and office buildings, warehouses, and production facilities. The equipment consists of the connected system of individual components that are installed in the vacuum air-conditioning and ventilation systems, thus improving the performance of the state-of-the-art vacuum distribution system known otherwise and reducing the price thereof. The vacuum air-conditioning and ventilation systems according to Fig. 1 usually consist of the central ventilation unit 16 fitted with a fan 17, central control unit, at least one main air streamline 3, at least two air streamlines 2, and at least one connection point 1. At its outlet, the main air streamline 3 is connected by its outlet 21 to the inlet 4 of the central ventilation unit 16. Designation of individual inlets and outlets is here considered in the air flow direction for vacuum systems. The inlet 20 of the main air streamline 3 is connected to the outlet 19 of the connection point 1 that is connected to the outlets 18 of the air streamlines 2 by its inlets 8, 8'. The air streamlines 2 have their inlets in individual ventilated premises.

The air flow control equipment according to the schematic diagram in Fig. 1 consists of at least one de-centralized control unit 15 and at least one redistribution mechanism 6 and of a fan 17 with pressure-dependent or pressure-independent controllable rotary characteristics. The decentralized control unit 15 is arranged in the main air streamline 3. The redistribution mechanism 6 is arranged in the connecting point 1. The fan 17 with pressure-dependent or pressure-independent controllable rotary characteristics is part of the central ventilation unit 16. The de-centralized control unit 15, redistribution mechanism 6 and fan 17 are connected to the common central control unit (not shown) that performs the continuous control of the quantity of air exhausted from individual ventilated rooms, from individual air streamlines 2 and the building as a whole.

According to one completely specific example of the invention shown in Fig. 1, the ventilation system has a simple arrangement with only two air streamlines 2 supplying air from two oppose directions. These air streamlines 2 are connected in a single connection point 1, to which connected is a single main air streamline 3 fitted with one de-centralized control unit 15 connected to just one central ventilation unit 16 with just one fan 17.

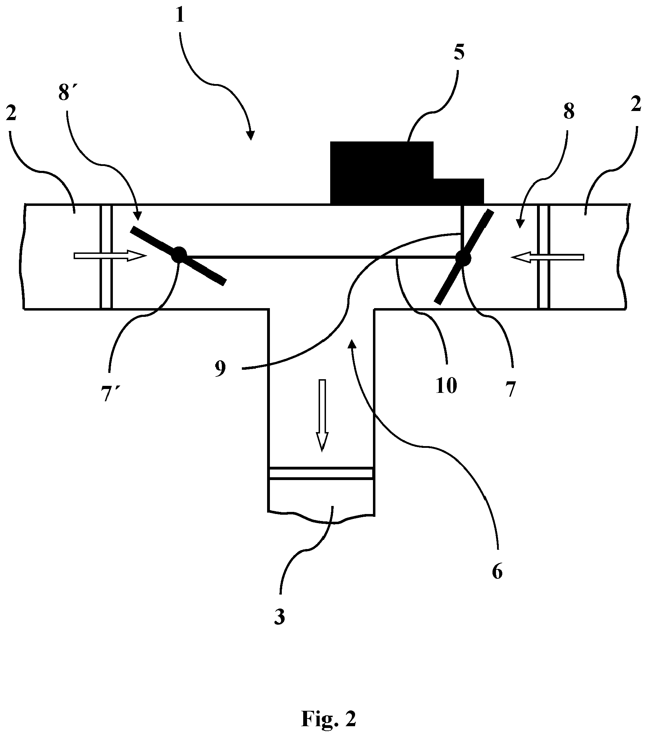

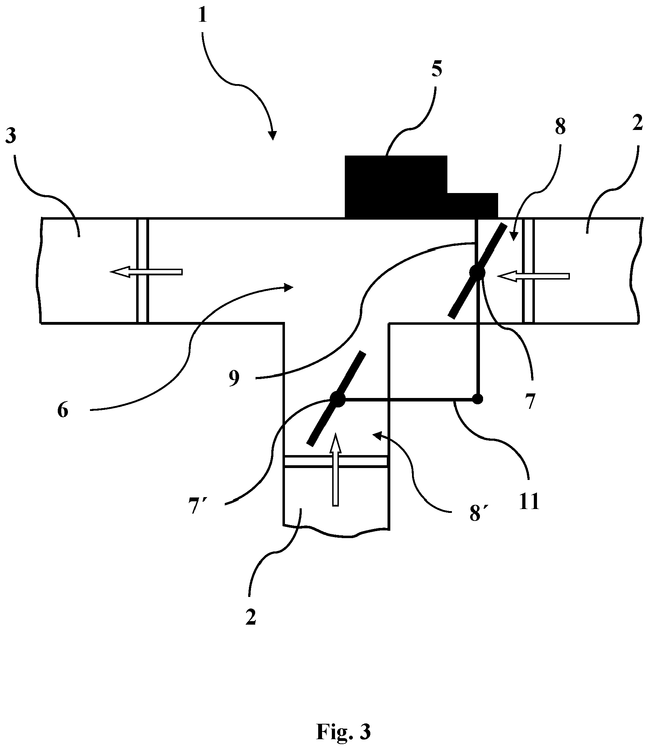

According to another example of the invention shown in Fig. 1 to 3, the redistribution mechanism 6 is part of the connection point 1 and consists of a single first drive unit 5 and at least two redistribution valves 7, 7'. The first drive unit 5 and redistribution valves 7, 7' are mutually mechanically connected in a manner allowing the first drive unit 5 to drive directly only one first redistribution valve 7 while the other ones are driven indirectly within the framework of one connection point 1. Each redistribution valve 7, 7' is located separately, in a pivotal manner in just one inlet 8, 8' of the connection point 1 in the place of its connection with the outlet 18 of the air streamline 2. The first drive unit 5 is mechanically connected to the first redistribution valve 7. This connection is ensured by the transmission of rotary motion generated by the first drive unit 5 to the first redistribution valve 7. The second redistribution valve 7' is then mechanically connected to the first redistribution valve by a coupled mechanism 7. Rotary motion generated by the first drive unit 5 is thus indirectly transmitted by exactly the first redistribution valve 7. Motion of the first redistribution valve 7 and the second redistribution valve 7' is synchronized in a manner allowing at least one of these redistribution valves 7, 7' to close the respective inlet 8, 8' of the connection point 1 at the moment when the other redistribution valve 7' is in the position of its maximum set opening. The angle of displacement of the redistribution valves 7, 7' is the same for both redistribution valves 7, 7'. The ratio of openness by the coupled mechanism of motion of the connected redistribution valves 7, 7' is variable within the framework of the service manual setting of the connection point 1. Therefore, when one of the redistribution valves, 7, 7' is completely closed, this does not automatically mean that the other of these redistribution valves 7, 7' is opened at an angle of 90°.

In one of the specific examples of the invention not shown, the angle of opening of the first redistribution valve 7 is 75° at the moment when the second redistribution valve 7' is fully closed. Reciprocally, if in this not shown example of the invention, the setting of mutual position of the redistribution valves 7, 7' is such that the first redistribution valve 7 is fully closed, the angle of opening of the second redistribution valve 7' is exactly 75°.

According to the example of the invention shown in Figures 1 to 3, the mechanical connection of the first drive unit 5 with the first redistribution valve 7 is implemented via the first turning shaft 9. According to the same example of the invention, mechanical connection of the first redistribution valve 7 with the second redistribution valve 7' is implemented via a connecting rod 10. The connecting rod 10 ensures the synchronization of the transmission of the first redistribution valve 7 rotary motion, when the first redistribution valve 7 is actuated by the first drive unit 5, to the second redistribution valve 7'.

According to another specific example of the invention, mechanical connection of the first redistribution valve 7 with the second redistribution valve 7' is implemented by a mechanical linkage 11. The mechanical linkage 11 is used for ensuring the synchronized transmission of the first redistribution valve 7 rotation generated by the first drive unit 5 to the second redistribution valve 7' in the cases where both redistribution valves 7, 7' are found in air streamlines 2 with no common one central axis. A person skilled in the art will easily derive by way of simple experiment and application of general knowledge in the field other possible examples of the mechanical connection fulfilling the same purpose and function. Such types of mechanical connection may refer to sprocket wheels, belt pulleys, chain sprockets, rack bars with sprocket wheels, etc.

According to an example of the invention shown in Fig. 1, the de-centralized control unit 15 refers to a one-way redistribution valve consisting of the second drive unit 12, main redistribution valve 14, and a measuring device, not shown, that measures the volume of air flown. The second drive unit 12 is mechanically connected with the main redistribution valve 14 via the second turning shaft 13. Even in this example of the invention, the solution cannot be regarded as a limited list of options available. Even in this case, a person skilled in the art will easily derive by way of simple experiment and application of general knowledge in the field other possible examples of the mechanical connection fulfilling the same purpose and function. Such types of mechanical connection may again refer to sprocket wheels, belt pulleys, chain sprockets, rack bars with sprocket wheels, etc.

According to a specific example of the invention, the first drive unit 5 and the second drive unit 12 refer to step motors or servo motors. Even in this case, the list of drive units is not limited as the drive may refer to other drives known to a person skilled in the art, such as other types of electric motors, piston drives, etc.

According to a specific example of the invention, each redistribution valve 7, 7' of the redistribution mechanism 6 is arranged in a manner allowing the scope of its maximum adjustable angle of displacement in the case of just two redistribution valves 7, 7' to be adjustable within the scope from 0° to 90°, where the sum of the angles of displacement α of the first redistribution valve 7 and β of the second redistribution valve 7' is the same at any moment for all possible variants of mutual displacement α + β of both redistribution valves 7, 7'. At the same time it applies, according to the example of the invention shown in Fig. 1, that if the air flow rates A and B supplied from the ventilation system air streamlines 2 to one connection point are of a size of X m³/h and Y m³/h, then the following applies to the outlet flow rate C of air from the de-centralized control unit 15: C = A + B = (X + Y) m³/h.

According to a specific example of the invention, not shown, the motion of the redistribution valves 7, 7', 14 in the equipment is controlled by electric impulses from the central control unit. In addition, the equipment allows de-centralized control using inserted impulses. The central control unit evaluates and assigns controlling priority to all impulses. Inserted impulse here refers to an input of a stimulus by manual operation of the BOOST keys or by a stimulus via a remote control or from inserted sensors located in the ventilation system. Remote control or inserted sensor may refer to temperature sensors, CO₂ sensors, NOₓ sensors, sensors responding to opening of windows and doors, sensors responding to exhaust hood activation, sensors of the fire alarm and detection system, mobile phone, computer, tablet, notebook, and many other sensors and electronic devices.

### Industrial Applicability

The air flow control equipment will find application in the building industry in relation to the construction of ventilation and air-conditioning units and air-handling systems in family houses, apartment houses, office buildings and production facilities.

### List of the Positions used in the Drawings

- 1: connection point
- 2: air streamline
- 3: the main air streamline
- 4: central ventilation unit inlet
- 5: the first drive unit
- 6: redistribution mechanism
- 7: the first redistribution valve
- 7': the second redistribution valve
- 8: the first inlet of the connection point
- 8': the second inlet of the connection point
- 9: the first turning shaft
- 10: connecting rod
- 11: mechanical linkage
- 12: the second drive unit
- 13: the second turning shaft
- 14: the main redistribution valve
- 15: de-centralized control unit
- 16: central ventilation unit
- 17: fan
- 18: air streamline outlet
- 19: connection point outlet
- 20: the main air streamline inlet
- 21: the main air streamline outlet
- A: air flow through the first air streamline
- B: air flow through the second air streamline
- C: output air flow of the de-centralized control unit

## Claims

1. The air flow control equipment, intended in particular for vacuum air-conditioning and ventilation systems in residential and office buildings, warehouses, and production facilities, comprising the central ventilation unit (16) with a fan (17), the central control unit, at least one main air streamline (3), at least two air streamlines (2), and at least one connection point (1), where the main air streamline (3) is connected by its outlet (21) with the inlet (4) of the central ventilation unit (16), the inlet (20) of the main air streamline (3) is connected with the outlet (19) of the connection point (1) that is, via its inlets (8, 8') connected to the outlets (18) of the air streamlines (2) with their inlets in individual ventilated premises, **characterized in that** the equipment comprises at least one de-centralized control unit (15) arranged in the main air streamline (3), at least one redistribution mechanism (6) arranged in the connection point (1) and the fan (17) with pressure-dependent or pressure-independent controllable rotary characteristics that is part of the central ventilation unit (16), connected with a common central control unit for the continuous control of the quantity of air exhausted from individual ventilated premises, from individual air streamlines (2) and the building as a whole.

2. The air flow control equipment according to claim 1, **characterized in that** the redistribution mechanism (6) is comprised of a first drive unit (5) that is part of the connection point (1), at least two redistribution valves (7, 7') of which each is placed in a rotary manner in just one inlet (8, 8') of the connection point (1) in the place of its connection with the outlet (18) of the air streamline (2), where the first drive unit (5) is mechanically connected with the first redistribution valve (7) to ensure its rotary motion and the second redistribution valve (7') is mechanically connected with the first redistribution valve (7) to generate the simultaneous transmission of the rotary motion from the first drive unit (5) via the coupled mechanism of motion, where the motion of the first redistribution valve (7) and that of the second redistribution valve (7') is synchronized in the following manner: at the moment when at least one of these redistribution valves (7, 7') fully closes the respective inlet (8, 8') of the connection point (1), the other of the redistribution valves (7, 7') is in the position of its maximum set opening, where the angle of displacement of the redistribution valves (7, 7') is the same for both redistribution valves (7, 7') while the ratio of openness of the redistribution valves (7, 7') generated by the coupled mechanism of motion is variable.

3. The air flow control equipment according to claim 2, **characterized in that** the mechanical connection of the first drive unit (5) with the first redistribution valve (7) is implemented by a turning shaft (9).

4. The air flow control equipment according to claims 2 and 3, **characterized in that** the mechanical connection of the first redistribution valve (7) with the second redistribution valve (7') is formed by a connecting rod (10) to ensure the synchronized transmission of the rotary motion of the first redistribution valve (7), whose rotary motion is actuated by the first drive unit (5), to the second redistribution valve (7').

5. The air flow control equipment according to claims 2 and 3, **characterized in that** the mechanical connection of the first redistribution valve (7) with the second redistribution valve (7') is implemented by a connecting rod (11) to ensure the synchronized transmission of the rotary motion of the first redistribution valve (7), whose rotary motion is actuated by the first drive unit (5), to the second redistribution valve (7').

6. The air flow control equipment according to claim 1, **characterized in that** the de-centralized control unit (15) refers to a one-way redistribution valve consisting of the second drive unit (12), main redistribution valve (14) mechanically connected to the second drive unit (12) via the second turning shaft (13), and a measuring device to measure the volume of air flown.

7. The air flow control equipment according to claims 1 to 3 and 6, **characterized in that** the first drive unit (5) and the second drive unit (12) refer to step electric step motors or servo motors.

8. The air flow control equipment according to claims 4 and 5, **characterized in that** the each redistribution valve (7, 7') is arranged in a manner that the scope of the maximum adjustable angle of displacement of the valve is adjustable within a range from 0° to 90°, wherein the sum of the angles of displacement α of the first redistribution valve (7) and β of the second redistribution valve (7') is at any time the same for all possible variants of mutual displacement of both redistribution valves (7, 7').
